Europäisches Patentamt

European Patent Office

Office européen des brevets

(19)

(11) **EP 1 165 697 B1**

(12) **EUROPÄISCHE PATENTSCHRIFT**

| | |
|---|---|
| (45) Veröffentlichungstag und Bekanntmachung des Hinweises auf die Patenterteilung:<br>**02.06.2004  Patentblatt 2004/23** | (51) Int Cl.$^7$: **C09C 1/36**, C09C 1/00,<br>C09C 3/08 |
| (21) Anmeldenummer: **00922421.3** | (86) Internationale Anmeldenummer:<br>**PCT/DE2000/000705** |
| (22) Anmeldetag: **06.03.2000** | (87) Internationale Veröffentlichungsnummer:<br>**WO 2000/053679 (14.09.2000 Gazette 2000/37)** |

(54) **ORGANISCH NACHBEHANDELTE PIGMENTE FÜR LACKSYSTEME**

ORGANICALLY AFTERTREATED PIGMENTS FOR PAINT SYSTEMS

PIGMENTS RETRAITES ORGANIQUEMENT POUR SYSTEMES DE LAQUES

(84) Benannte Vertragsstaaten:
**AT BE CH CY DE DK ES FI FR GB GR IE IT LI LU MC NL PT SE**
Benannte Erstreckungsstaaten:
**SI**

(30) Priorität: **10.03.1999  DE 19910521**

(43) Veröffentlichungstag der Anmeldung:
**02.01.2002   Patentblatt 2002/01**

(73) Patentinhaber: **Kronos Titan GmbH & Co. Ohg**
**51307 Leverkusen (DE)**

(72) Erfinder:
• **ORTH-GERBER, Jürgen**
**D-53804 Much (DE)**

• **ELFENTHAL, Lothar**
**D-40764 Langenfeld (DE)**
• **BLÜMEL, Siegfried**
**D-40883 Ratingen-Eggerscheid (DE)**

(56) Entgegenhaltungen:
**WO-A-97/30127        DE-A- 1 467 442**
**DE-A- 4 312 035        GB-A- 1 417 574**
**US-A- 4 226 637**

• **DATABASE WPI Section Ch, Week 199207 Derwent Publications Ltd., London, GB; Class D21, AN 1992-051980 XP002144625 & JP 03 294220 A (DAINICHISEIKA COLOR & CHEM MFG), 25. Dezember 1991 (1991-12-25)**

EP 1 165 697 B1

## Beschreibung

Die Erfindung betrifft ein Verfahren zur Herstellung leicht dispergier- und benetzbarer Pigmentteilchen, bei dem Primärteilchen in einer Strahlmühle aufgemahlen werden, wobei eine organische Substanz / ein organisches Substanzgemisch als Mahlhilfsmittel zugegeben wird, sowie leicht dispergier- und benetzbare unbehandelte oder anorganisch nachbehandelte, aufgemahlene Titandioxidpigmente und deren Verwendung in Lacksystemen.

Neben einem schleierfreien Hochglanz der Beschichtung sind eine sehr gute Benetzbarkeit und Dispergierbarkeit wichtige Forderungen an beispielsweise hochwertige Titandioxidpigmente für deren Einarbeitung in Lacksysteme. Solche Lackpigmente weisen neben einer anorganischen Beschichtung (Oxide, Phosphate, Silikate, Borate) auch eine organische Beschichtung auf. Als organische Substanzen werden dabei vor allem Glycerin, Pentaerythritol, Trimethylolethan und Triethylolpropan eingesetzt. Nach der DE 14 67 442 wird die Dispergierbarkeit und der Glanz von Titandioxid in Lacksystemen auch durch die Behandlung mit Umsetzungsprodukten von Polyolen und Ethylenoxid positiv beeinflußt. Auch verbessern Oberflächenbehandlungen mit Salzen von Alkanolaminen und Hydroxycarbonsäuren die Dispergierbarkeit.

Gemäß GB 1 417 574 wird ein Gemisch aus einer hydrophilen und einer hydrophoben Organik als Mahlhilfsmittel verwendet. Als hydrophile Organik sind Polyalkohol, Carbonsäure oder Hydroxycarbonsäure, als hydrophobe Organik Polysiloxan, Fettalkohol oder Dioctylphthalat genannt.

Aus der DE 43 12 035 A ist die organische Nachbehandlung von anorganischen Pigmenten für die Papierherstellung bekannt. Hier verbessert der organische Zusatz - hydrophile mehrwertige Alkohole - in erster Linie die Fließfähigkeit und verhindert die Schaumbildung bei der Verarbeitung.

In der US-A 4,226,637 wird die organische Beschichtung von Pigmenten und Füllem zur Verbesserung der Dispergierfähigkeit beschrieben. Die Zugabe der Substanz kann vor, während oder nach der Mahlung erfolgen.

Die DE 14 67 442 A betrifft Pigmente, die zum Zwecke der verbesserten Dispergierbarkeit mit Alkoholderivaten versetzt werden, wobei die Zugabe vor oder während der Mahlung erfolgen muss.

Bei den bekannten Verfahren zur Herstellung hochwertiger Pigmente ist eine Strahlmahlung, in den meisten Fällen eine Dampfmahlung, unverzichtbar; die erwähnten organischen Stoffe werden vor oder während der Mahlung zugegeben. Sie verbessern als "Mahlhilfsmittel" wesentlich das Endprodukt in Bezug auf die Teilchengrößenverteilung des Pigments und die Förderbarkeit nach der Mühle, und sie verkleinern den Energieeintrag bei der Mahlung. Dabei ist selbstverständlich zu beachten, daß sich die aufgebrachte Organik durch die thermische Belastung bei der Dampfmahlung chemisch nicht unerwünscht verändert (nicht zersetzt wird, keine unerwünschten Ablagerungen bildet u. a.). Die Auswahl der Organik ist daher begrenzt durch deren Eignung als "Mahlhilfsmittel".

Aufgabe der vorliegenden Erfindung ist die Bereitstellung eines Herstellungsverfahrens, bei dem die organische Beschichtung der Pigmentpartikel besser auf die geplanten Einsatzzwecke, vorzugsweise in Lacksystemen, abstimmbar ist, also beispielsweise auch eine Organik zum Einsatz kommen kann, die bei einer Dampfmahlung instabil wäre. Die organische Nachbehandlung soll so vorgenommen werden, daß sowohl die Strahlmahlung durch Mahlhilfsmittel wie auch die Pigmenteigenschaften wie Dispergierbarkeit, Benetzung und Glanz optimiert werden.

Die Aufgabe wird erfindungsgemäß dadurch gelöst, daß nach der Strahlmahlung in Gegenwart eines Mahlhilfsmittels (Organik I) eine organische Substanz I ein organisches Substanzgemisch (Organik II) auf die Pigmentteilchen aufgebracht wird, wobei die Organik II amphiphil ist und einen HLB-Wert zwischen 10 und 18 aufweist.

Gegenstand der Erfindung sind auch leicht dispergier- und benetzbare unbehandelte oder anorganisch nachbehandelte und aufgemahlene Titandioxidpigmente gekennzeichnet durch eine doppelte organische Beschichtung mit einer inneren Schicht (Organik I) und einer äußeren Schicht (Organik II), wobei die äußere Schicht (Organik II) amphiphilen Charakter hat und einen HLB-Wert zwischen 10 und 18 aufweist , sowie die Verwendung solcher Pigmente in vorzugsweise wasserverdünnbaren Lacksystemen.

Bei den erfindungsgemäßen Pigmenten ist die organische Substanz als äußerste Schicht auf den Partikeln optimal auf den Anwendungszweck hin ausgewählt. Sie hat amphiphilen Charakter; es befinden sich gegenüber dem gemahlenen Pigment verträgliche und matrixverträgliche Gruppen am gleichen Molekül. Die darunter liegende organische Schicht (Organik I) stammt vom zugegebenen Mahlhilfsmittel. Die Auswahl der äußeren organischen Schicht (Organik II) erfolgt allein hinsichtlich deren Eignung zur Verbesserung der Pigmenteigenschaften, insbesondere der Benetzbarkeit, der Dispergierbarkeit und des Glanzes, und braucht nicht als Mahlhilfsmittel geeignet zu sein.

Das Aufbringen der Organik 11 ist an sich bekannt und unkritisch; gemäß der Erfindung vergrößert sich die Zahl der möglichen Substanzen. Die Organik II wird entweder in reiner Form, als wässrige Lösung oder als wässrige Emulsion durch Versprühen, Vernebeln oder Verdampfen auf das aufgemahlene Pigment gebracht. Durch die Funktionstrennung der Organik in Mahl- und Dispergier- bzw. Benetzungshilfsmittel wird eine erhebliche Qualitätsverbesserung der Pigmente erreicht.

Das Verfahren eignet sich besonders zur organischen Nachbehandlung von Titandioxidpigmenten, die nach dem Sulfat- oder Chloridprozeß hergestellt sind und in der Rutil- oder Anatasform eingesetzt werden können.

Die anorganische Beschichtung erfolgt nach bekannten Verfahren in wässriger Phase. Eine gegebenenfalls sandgemahlene Titandioxidsuspension, die als Dispergiermittel beispielsweise Polyphosphat, Aminoalkohol oder Polyacrylate oder anorganische Salze enthalten kann, wird mit Salzen der anorganischen Oxide, Phosphate oder Silikate versetzt; durch Verändern des pH-Wertes werden entsprechende Oxidhydrate, bzw. Phosphate, Borate oder Silikate ausgefällt. Nach einer Filtration und Trocknung erfolgt eine abschließende Mahlung mit Mahlhilfsmitteln (Organik I), z. B. Alkanolaminen, wie Triethanolamin, Triisopropanolamin, 2-Amino-2-methyl-1-propanol, Polyalkoholen, wie Trimethylolpropan, Trimethylolethan, Neopentylglykol, Pentaerythrit, Glykole, Fettalkoholen oder Fettsäureestem. Die dabei verwendete Menge bezogen auf Titandioxid beträgt 0,03 bis 1,0 %, bevorzugt 0,1 bis 0,5 % Mahlhilfsmittel. Diese Organik I kann entweder schon dem feuchten Filterkuchen, den Pasten oder den Pigmentsuspensionen vor der Trocknung zugemischt werden oder unmittelbar vor der abschließenden Mahlung dem getrockneten Pigment zugegeben werden, bei einer Strahlmühle bevorzugt dem gasförmigen Medium unmittelbar bei der Einspeisung in die Strahlmühle.

Erst nach der Strahlmahlung wird erfindungsgemäß das Pigment mit der Organik II, einer amphiphilen Verbindung, nachbehandelt. Die Organik II zeichnet sich durch spezielle gegenüber der gemahlenen Pigmentfläche verträgliche und matrixverträgliche Gruppen am gleichen Molekül aus. Es eignen sich nichtionische Dispergier- und Benetzungshilfsmittel wie Polyoxyethylenalkenylether oder ethoxylierte Polyalkohole mit Alkenyl- und Alkylresten, bestehend aus 6 bis 22 Kohlenstoffatomen, und Polyoxyethylenresten, bestehend aus 3 bis 40 Oxyethyleneinheiten. Sie werden durch Ethoxylierung von Fettalkoholen oder Polyalkoholen erzeugt. Die mittels des HLB-Wertes (hydrophilic-lipophilic-balance) ausgedrückten Eigenschaften der Polyoxyethylenalkenylether oder ethoxylierten Polyalkohole liegen bei HLB-Werten von 10 bis 18, bevorzugt von 12 bis 14. Die Polyoxyethylenalkenylether oder ethoxylierten Polyalkohole werden entweder in reiner Form, als wässrige Lösungen oder wässrige Emulsionen durch Versprühen, Vernebeln oder Verdampfen auf das zuvor gemahlene Pigment aufgebracht. Die verwendete Menge beträgt 0,1 bis 1,5 %, bevorzugt 0,2 bis 0,8 %, bezogen auf Titandioxid.

Unabhängig vom Mahlhilfsmittel (Organik I) kann der hydrophile/hydrophobe Charakter des Pigments über die Menge und den HLB-Wert der Organik II gesteuert und auf die Anwendungsmatrix abgestimmt werden. Hierdurch werden die Benetzbarkeit, besonders in wasserverdünnbaren Lacksystemen, die Dispergierbarkeit und Glanzgebung positiv beeinflußt.

Die Erfindung wird nachfolgend anhand von Beispielen näher erläutert:

Die Beurteilung der Benetzbarkeit und des Glanzes der erfindungsmäßig hergestellten Pigmente erfolgt mit einem Benetzbarkeitstest und einer Glanzmessung in einem wasserverdünnbaren Hochglanzdispersionslack. Beide Tests werden im folgenden beschrieben.


Benetzbarkeitstest


Zur Beurteilung der Pigmentbenetzbarkeit in wasserverdünnbaren Lacksystemen wird eine bestimmte Menge an Pigment unter leichtem Rühren portionsweise zur Formulierung (enthält alle Komponenten bis zum Auflackschritt) eines Hochglanzdispersionslackes gegeben und das Benetzungsverhalten während des Einarbeitungsschrittes beurteilt. Die Restmenge an Pigment ab einer sichtbar schlechteren Benetzbarkeit im Verlauf der Pigmentzugabe wird als Maß für die Benetzbarkeit angesehen. Je kleiner diese Restmenge, desto besser die Pigmentbenetzbarkeit. Es werden im einzelnen 214 g Pigment in einem Dispergiergefäß (Dispermat, 250 ml, Ø = 8,5 cm) unter leichtem Rühren (600 upm, Dispergierscheibe Ø = 4 cm) portionsweise zu einer Formulierung folgender Zusammensetzung gegeben:

| | |
|---|---|
| 22,0 g 1,2-Propandiol | (Dow Germany Inc., Frankfurt a. M.) |
| 30,0 g destilliertes Wasser | |
| 2,0 g AMP 90 | (Angust Chemie, Ibbenbüren) |
| 2,4 g Tego Foamex 805 | (Tego Chemie, Essen) |
| 4,0 g Surfynol 104 E | (Biesterfield & Co, Hamburg) |
| 29,0 g NeoCryl BT 24 | (Zeneca, Frankfurt a. M.) |

Die Beurteilung der Pigmentbenetzbarkeit erfolgt nach folgender Einteilung, die sich an dem Rückstand an Pigment orientiert, ab dem eine sichtbar schlechtere Benetzbarkeit eintritt.

| Benetzbarkeit | sehr gut | gut | mittel/gut | mittel | mittel/schlecht | schlecht |
|---|---|---|---|---|---|---|
| Restmenge an Pigment | < 25 g | 25-45 g | 45-55 g | 55-65 g | 65-90 g | > 90 g |

Hochglanzdispersionslack

Die Dispergierbarkeit und Glanzgebung der Titandioxidpigmente in wasserverdünnbaren Lacksystemen wird anhand eines Hochglanz-Dispersionslackes getestet. Dazu wird ein Hochglanz-Dispersionslack nach Standardrezeptur hergestellt und vor der weiteren Verarbeitung mindestens drei Tage gelagert. Der Lack wird auf Morestkarten (Lona AG, Zürich) in einer Naßschichtdicke von 150 μm aufgezogen und der Lackfilm zwei Tage luftgetrocknet. Die Glanzmessung erfolgt am trockenen Lack in einem 20°-Winkel mit einem haze-gloss Glanzmeßgerät (BYK Gardner, Geretsried). Mit einem Hunterlab Farbmeßgerät wird außerdem das Kontrastverhältnis (KV) (Maß für Deckvermögen) an Morestkarten über weißem und schwarzem Untergrund gemessen. Die Helligkeit (L*) und der Farbstich (b*) in weiß werden an Lackfilmen auf PVC-Folie bei einer Naßschichtdicke von 300 μm mit einem Hunterlab Farbmeßgerät bestimmt.

Standardrezeptur zur Pigmenttestung (Hochglanz-Dispersionslack, PVK = 18 %)

| Gewichts-Teile | | |
|---|---|---|
| Propylenglykol | 11,0 | |
| Wasser | 15,0 | |
| AMP 90 | 1,0 | (Angus Chemie, Ibbenbüren) |
| Tego Foamex 805 | 1,2 | (Tego Chemie, Essen) |
| Surfynol 104E | 2,0 | (Biesterfeld & Co, Hamburg) |
| NeoCryl BT 24 | 14,5 | (Zeneca, Frankfurt a. M.) |
| Titandioxid | 107,0 | |
| Im Kühltopf 10 Minuten mit ca. 10 m/s dispergieren | | |
| Wasser | 28,3 | |
| Rheolate 278 | 18,0 | (Elementis Germany Inc., Leverkusen) |
| Butyldiglykol | 14,5 | |
| Methoxibutanol | 15,5 | |
| NeoCryl XK 75 | 270,0 | (Zeneca, Frankfurt) |
| Tego Foamex 805 | 2,0 | (Tego Chemie, Essen) |
| | 500,00 | |

Für alle nachfolgenden Beispiele wird ein nach dem Chlorid-Verfahren hergestelltes Titandioxid-Basismaterial verwendet. In bekannter Weise wird daraus eine Suspension hergestellt, die in einer Sandmühle gemahlen wird. Die so erhaltene Suspension wird ebenfalls in bekannter Weise mit einer $SiO_2$-Schicht und einer $Al_2O_3$-Schicht versehen und anschließend filtriert. Nach dem Trocknen des erzeugten Filterkuchens erhält man den sogenannten Trocknerklinker, der, wie in den folgenden Beispielen beschrieben, weiterbehandelt wird.

Beispiel 1 (Vergleichsbeispiel)

Der Trocknerklinker wird in einer für die Titandioxid-Industrie üblichen Strahlmühle unter Zugabe einer wässrigen Trimethylolpropanlösung zum Eintrag der Strahlmühle gemahlen. Das als Mahlhilfsmittel zugegebene Trimethylolpropan wird in einer Menge dosiert, die im gemahlenen Pigment eine Konzentration von 0,38 % Trimethylolpropan bezogen auf Titandioxid erzeugt. Das so erhaltene Pigment wird nach dem oben ausgeführten Benetzbarkeitstest und im Hochglanzdispersionslack geprüft. Zu den Ergebnissen siehe Tabelle 1.

Beispiel 2 (Vergleichsbeispiel)

Der Trocknerklinker wird in einer für die Titandioxid-Industrie üblichen Strahlmühle Unter Zugabe einer wässrigen Emulsion eines Polyoxyethylenalkenylethers (z. B. SER AD FN 265, Produktbezeichnung der Firma Servo Delden BV)) mit einem HLB-Wert von 13 zum Eintrag der Strahlmühle gemahlen. Der als Mahlhilfsmittel zugegebene Polyoxyethylenalkenylether wird in einer Menge dosiert, die im gemahlenen Pigment eine Konzentration von 0,50 % Polyoxyethylenalkenylether bezogen auf Titandioxid erzeugt. Das so erhaltene Pigment wird nach dem oben ausgeführten Benetzbarkeitstest und im Hochglanzdispersionslack geprüft. Zu den Ergebnissen siehe Tabelle 1.

Beispiel 3

Der Trocknerklinker wird in einer für die Titandioxid-Industrie üblichen Strahlmühle unter Zugabe einer wässrigen Trimethylolpropanlösung zum Eintrag der Strahlmühle gemahlen. Das als Mahlhilfsmittel zugegebene Trimethylolpropan wird in einer Menge dosiert, die im gemahlenen Pigment eine Konzentration von 0,18 % Trimethylolpropan bezogen auf Titandioxid erzeugt. Zusätzlich wird das gemahlene Pigment mit einem Dispergier- und Benetzungshilfsmittel im Anschluß an die Mahlung behandelt. Dies geschieht in der Weise, daß eine wässrige Emulsion von Polyoxyethylenalkenylether mit einem HLB-Wert von 13, z. B. SER AD FN 265 (Produktbezeichnung der Firma Servo Delden BV) in den Pigment/Gasstrom nach der Strahlmühle gesprüht wird. Die Menge an Emulsion wird so dosiert, daß im fertigen Pigment eine Konzentration von 0,45 % Polyoxyethylenalkenylether bezogen auf Titandioxid vorliegt. Das so erhaltene Pigment wird nach dem oben ausgeführten Benetzbarkeitstest und im Hochglanzdispersionslack geprüft. Zu den Ergebnissen siehe Tabelle 1.

Beispiel 4

Wie Beispiel 3, mit dem Unterschied, daß der verwendete Polyoxyethylenalkenylether einen HLB-Wert von 18 besitzt (erhöhter Polyoxyethylenanteil).

Beispiel 5

Der Trocknerklinker wird in einer für die Titandioxid-Industrie üblichen Strahlmühle unter Zugabe einer wässrigen Trimethylolpropanlösung zum Eintrag der Strahlmühle gemahlen. Das als Mahlhilfsmittel zugegebene Trimethylolpropan wird in einer Menge dosiert, die im gemahlenen Pigment eine Konzentration von 0,18 % Trimethylolpropan bezogen auf Titandioxid erzeugt. Zusätzlich wird das gemahlene Pigment mit einem Dispergier- und Benetzungshilfsmittel im Anschluß an die Mahlung behandelt. Dies geschieht in der Weise, daß eine wässrige Lösung von ethoxyliertem 2-Ethyl-2-hydroxymethyl-1,3-propandiol mit einem HLB-Wert von 16, z. B. NMO 15 (Produktbezeichnung der Firma Servo Delden BV) in den Pigment/ Gasstrom nach der Strahlmühle gesprüht wird. Die Menge an Emulsion wird so dosiert, daß im fertigen Pigment eine Konzentration von 0,28 % ethoxyliertem 2-Ethyl-2-hydroxymethyl-1,3-propandiol bezogen auf Titandioxid vorliegt. Das so erhaltene Pigment wird nach dem oben ausgeführten Benetzbarkeitstest und im Hochglanzdispersionslack geprüft. Zu den Ergebnissen siehe Tabelle 1.

Beispiel 6

Wie Beispiel 5, mit dem Unterschied, daß das verwendete ethoxylierte 2-Ethyl-2-hydroxymethyl-1,3-propandiol einen HLB-Wert von 18 besitzt (erhöhter Polyoxyethylenanteil).
Man erkennt aus den Beispielen 3 und 4, daß die Wirkung des Polyoxyethylenalkenylethers im Vergleich zu Beispiel 2 besser zum Tragen kommt, wenn die hohe thermische Belastung in der Dampfmühle vermieden wird. Der Einsatz von Polyoxyethylenalkenylether als Mahlhilfsmittel ist möglich, bringt jedoch keine Vorteile. Erst die organische Behandlung mit Polyoxyethylenalkenylether im Anschluß an die Strahlmahlung mit Trimethylolpropan als Mahlhilfsmittel bringt den die Erfindung kennzeichnenden Vorteil. Es wird eine verbesserte Benetzbarkeit und eine gleichmäßige Verteilung der Pigmentpaste in der Matrix erreicht, was einen höheren Glanz ergibt.
Die Beispiele 3 bis 6 zeigen, daß über die Organik II gezielt auf die Eignung der Pigmente für spezielle Anwendungen Einfluß genommen werden kann.

## Tabelle 1

| Beispiel | Mahlhilfsmittel (Organik I) | Dispergier- und Benetzungshilfs- mittel (Organik II) | HLB- Wert | Alkyl-, Alkenyl- rest | Benetzbarkeit | | Glanz 20° | KV [%] | Optik | |
|---|---|---|---|---|---|---|---|---|---|---|
| | | | | | Rückstand | Verhalten | | | L* | b* |
| 1 | Trimethylolpropan | - | - | - | 90 | mittel/ schlecht | 41 | 96,7 | 98,14 | 1,29 |
| 2 | Polyoxyethylen- alkenylether | - | 13 | C16-C18 | 85 | mittel/ schlecht | 41 | 96,3 | 98,00 | 1,35 |
| 3 | Trimethylol- propan | Polyoxyethylen- alkenylether | 13 | C16-C18 | 39 | gut | 44 | 96,9 | 98,04 | 1,42 |
| 4 | Trimethylol- propan | Polyoxyethylen- alkenylether | 18 | C16-C18 | 54 | mittel/gut | 41 | 96,5 | 97,91 | 1,21 |
| 5 | Trimethylol- propan | ethoxyliertes 2-Ethyl- 2-hydroxymethyl- 1,3-propandiol | 16 | C6 | 62 | mittel | 46 | 96,9 | 98,23 | 1,30 |
| 6 | Trimethylol- propan | ethoxyliertes 2-Ethyl- 2-hydroxymethyl- 1,3-propandiol | 18 | C6 | 59 | mittel | 43 | 96,6 | 98,05 | 1,26 |

# EP 1 165 697 B1

**Patentansprüche**

1. Verfahren zur Herstellung leicht dispergier- und benetzbarer Pigmentteilchen, bei dem Primärteilchen in einer Strahlmühle aufgemahlen werden, wobei eine organische Substanz / ein organisches Substanzgemisch (Organik I) als Mahlhilfsmittel zugegeben wird, **dadurch gekennzeichnet, dass** nach der Strahlmahlung eine organische Substanz / ein organisches Substanzgemisch (Organik II) auf die Pigmentteilchen aufgebracht wird, wobei die Organik II eine amphiphile Verbindung ist und einen HLB-Wert zwischen 10 und 18 aufweist.

2. Verfahren nach Anspruch 1, **dadurch gekennzeichnet, dass** die Primärteilchen Titandioxidpigmentteilchen sind.

3. Verfahren nach Anspruch 2, **dadurch gekennzeichnet, dass** die Primärteilchen anorganisch nachbehandelte Titandioxidpigmentteilchen sind.

4. Verfahren nach einem oder mehreren der Ansprüche 1 bis 3, **dadurch gekennzeichnet, dass** die amphiphile Verbindung einen HLB-Wert zwischen 12 und 14 aufweist.

5. Verfahren nach einem oder mehreren der Ansprüche 2 bis 4, **dadurch gekennzeichnet, dass** die amphiphile Verbindung in einer Menge von 0,1 bis 1,5 % bevorzugt 0,2 bis 0,8 % bezogen auf Titandioxid aufgebracht wird.

6. Verfahren nach Anspruch 1 oder 4, **dadurch gekennzeichnet, dass** die amphiphile Verbindung ein ethoxylierter Fettalkohol ist.

7. Leicht dispergier- und benetzbare, unbehandelte oder anorganische nachbehandelte, aufgemahlene Titandioxidpigmente **gekennzeichnet durch** eine doppelte organische Beschichtung mit einer inneren Schicht (Organik I) und einer äußeren Schicht (Organik II), wobei die äußere Schicht (Organik II) amphiphilen Charakter hat und einen HLB-Wert zwischen 10 und 18 aufweist.

8. Titandioxidpigmente nach Anspruch 7, **dadurch gekennzeichnet, dass** die Organik I ein bekanntes Mahlhilfsmittel und die Organik II ein ethoxylierter Fettalkohol sind.

9. Verwendung der leicht dispergier- und benetzbaren Titandioxidpigmente nach Anspruch 7 oder 8 in Lacksystemen.

10. Verwendung der leicht dispergier- und benetzbaren Titandioxidpigmente nach Anspruch 7 oder 8 in wasserverdünnbaren Lacksystemen.


**Claims**

1. A process for the production of readily dispersable and wettable pigment particles where the primary particles are ground in a jet mill wherein an organic substance / organic substance mixture (organic compound I) is applied as a grinding aid, **characterised in that**, following the jet grinding, an organic substance / organic substance mixture (organic compound II) is applied to the pigment particles, wherein the organic compound II is an amphiphilic compound and has an HLB value of between 10 and 18.

2. The process according to Claim 1, **characterised in that** the primary particles are titanium dioxide pigment particles.

3. The process according to Claim 2, **characterised in that** the primary particles are inorganically aftertreated titanium dioxide pigment particles.

4. The process according to Claim 1, 2 or 3, **characterised in that** the amphiphilic compound has an HLB value of between 12 and 14.

5. The process according to Claim 2, 3 or 4, **characterised in that** the amphiphilic compound is applied in a quantity of between 0,1 to 1,5 %, preferably between 0,2 to 0,8 % relative to titanium dioxide.

7

6. The process according to Claim 1 or 4, **characterised in that** the amphiphilic compound is an ethoxylated fatty alcohol.

7. Readily dispersible and wettable, untreated or inorganically aftertreated ground titanium dioxide pigments **characterised by** a double organic coating with an inner coating layer (organic compound I) and an outer coating layer (organic compound II), wherein the outer coating layer (organic compound II) has an amphiphilic character and has an HLB value of between 10 and 18.

8. Titanium dioxide pigments according to Claim 7, **characterised in that** the organic compound I is a known grinding aid and the organic compound II is an ethoxylated fatty alcohol.

9. Application of the readily dispersable and wettable titanium dioxide pigments according to Claim 7 or 8 in paint systems.

10. Application of the readily dispersable and wettable titanium dioxide pigments according to Claim 7 or 8 in water dilutable paint systems.


**Revendications**

1. Procédé destiné à la fabrication de particules de pigment facilement dispersibles et mouillables, dans lequel des particules primaires sont broyées dans un broyeur à jet, une substance organique / un mélange de substances organiques (substance organique I) étant ajouté(e) comme adjuvant de broyage, et **caractérisé en ce qu'**après le broyage au jet, une substance organique / un mélange de substances organiques (substance organique II) est appliqué(e) sur les particules de pigment, la substance organique II étant un composé amphiphile et présentant une valeur HLB comprise entre 10 et 18.

2. Procédé selon la revendication 1, **caractérisé en ce que**
les particules primaires sont des particules de dioxyde de titane.

3. Procédé selon la revendication 2, **caractérisé en ce que**
les particules primaires sont des particules de dioxyde de titane ayant subi un retraitement inorganique.

4. Procédé selon une ou plusieurs des revendications 1 à 3, **caractérisé en ce que**
le composé amphiphile présente une valeur HLB comprise entre 12 et 14.

5. Procédé selon une ou plusieurs des revendications 2 à 4, **caractérisé en ce que**
le composé amphiphile est appliqué à raison d'une quantité de 0,1 à 1,5 %, de préférence de 0,2 à 0,8 % par rapport au dioxyde de titane.

6. Procédé selon la revendication 1 ou 4, **caractérisé en ce que**
le composé amphiphile est un alcool gras éthoxylé.

7. Pigments de dioxyde de titane broyés facilement dispersibles et mouillables, non traités ou retraités inorganiquement, **caractérisés par** un double revêtement organique constitué d'une couche interne (substance organique I) et d'une couche externe (substance organique II), la couche externe (substance organique II) ayant un caractère amphiphile et présentant une valeur HLB comprise entre 10 et 18.

8. Pigments de dioxyde de titane selon la revendication 7, **caractérisés en ce que** la substance organique I est un adjuvant de broyage connu et la substance organique II est un alcool gras éthoxylé.

9. Utilisation des pigments de dioxyde de titane facilement dispersibles et mouillables selon la revendication 7 ou 8 dans des systèmes de peintures.

10. Utilisation des pigments de dioxyde de titane facilement dispersibles et mouillables selon la revendication 7 ou 8 dans des systèmes de peintures diluables dans l'eau.